# EUROPÄISCHE PATENTANMELDUNG

(11) **EP 3 699 572 A1**
(43) Veröffentlichungstag der Anmeldung: **26.08.2020**
(21) Anmeldenummer: 19158209.7
(22) Anmeldetag: 20.02.2019
(51) Int. Cl.: G01N 1/31, B01L 9/00, G01N 1/44, B82Y 30/00

(54) **INKUBATIONSVORRICHTUNG HERGESTELLT AUS EINEM KOMPOSITMATERIAL UND VERFAHREN ZUM FÄRBEN EINER PROBE**

(71) Anmelder: Euroimmun Medizinische Labordiagnostika AG, 23560 Lübeck (DE)
(72) Erfinder: Die Erfindernennung liegt noch nicht vor

(57) **Zusammenfassung**

Die vorliegende Erfindung richtet sich auf eine Inkubationsvorrichtung (1) für einen Objektträger (2) und ein Inkubationssystem, das die erfindungsgemäße Inkubationsvorrichtung und eine Reservoirvorrichtung (8) umfasst. Ferner richtet sich die vorliegende Erfindung auf die Verwendung eines Kompositmaterials zur Herstellung einer erfindungsgemäßen Inkubationsvorrichtung und ein Verfahren zum Färben einer Probe. In einer bevorzugten Ausführungsform ist das Material der Inkubationsvorrichtung ein Kompositmaterial, das Grafit, Kohlefaser, Polyphenylensulfid (PPS) und Polytetrafluorethylen (PTFE) umfasst, wie beispielsweise TECATRON PVX black der Firma Ensinger.

## Beschreibung

Die vorliegende Erfindung richtet sich auf eine Inkubationsvorrichtung für einen Objektträger und ein Inkubationssystem, das die erfindungsgemäße Inkubationsvorrichtung und eine Reservoirvorrichtung umfasst. Ferner richtet sich die vorliegende Erfindung auf die Verwendung eines Kompositmaterials zur Herstellung einer erfindungsgemäßen Inkubationsvorrichtung und ein Verfahren zum Färben einer Probe.

Die Färbung von Analyten ist eine Technik zur Bestimmung der Anwesenheit einer Zielstruktur, wie einem Protein oder Antigen von Interesse, und zur Identifizierung von deren Mustern oder Mengen. Wenn bei dieser Färbung eine Gewebeprobe verwendet wird, wird das Verfahren als Immunhistochemie (IHC) bezeichnet.

Ein großer Teil des Gewebes, das aus klinischen Proben erhalten wird, wird mit einem quervernetzenden Fixiermittel, wie Formaldehyd, fixiert. Eine solche Behandlung stoppt den natürlichen Abbau des Gewebes und ermöglicht es die Gewebemorphologie für viele Jahre beizubehalten. Die Fixierung bildet dabei Vernetzungen zwischen reaktiven Aminosäuren der Gewebeproteine in Form von Methylenbrücken und einem Polyoxy-Methylen-Netzwerk aus, das die Elution löslicher Proteine verhindert und die Proteine in einer räumlichen Anordnung hält, die der Struktur des lebenden Gewebes sehr ähnlich ist. Anschließend wird die Gewebeprobe entwässert und in ein Einbettungsmedium, vorwiegend Paraffinwachs, eingebettet, das es erlaubt, das Gewebe in Proben von weniger als 2 µm Dicke zu schneiden.

Die Fixierung bewirkt jedoch einen gewissen Verlust an Antigenität. Die in den Proteinen eingeführten Modifikationen verändern entweder die von Antikörpern erkannten Epitope selbst und/oder verhindern den Zugang zu ihnen. Viele Antigen-Retrieval-Verfahren wurden entwickelt, um die Antigenität von Gewebe wiederherzustellen, wobei die meisten von ihnen in eine von zwei Gruppen fallen.

Eines der beiden oben erwähnten Verfahren umfasst die Behandlung des Gewebes mit einem proteolytischen Enzym (PIER), das das Gewebe öffnet, um den Antikörpern den Zugang zu den Antigenen zu ermöglichen. Bei einigen spezifischen Antikörpern ist dieses Verfahren das bevorzugte Antigen-Retrieval-Verfahren, weist aber im Allgemeinen einige Nachteile auf. Da die proteolytischen Enzyme die Gewebeproteine abbauen, besteht ein erhebliches Risiko die spezifischen Epitope zu zerstören. Daher kann die Antigenität völlig verloren gehen und nicht wiederhergestellt werden. Darüber hinaus kann eine längere proteolytische Behandlung dazu führen, dass die Proteine ihre dreidimensionale Struktur verlieren, was für die Antikörper-Antigen-Erkennung auch ein Nachteil ist. Diese Faktoren erfordern eine genaue Kenntnis und Kontrolle über die Inkubationszeiten, wobei gerade die erforderlichen Inkubationszeiten stark von der Aktivität des proteolytischen Enzyms abhängen. Ein weiterer Nachteil des PIER-Verfahrens ist, dass längere proteolytische Behandlungen erforderlich sind je länger das Probenmaterial fixiert wurde und damit einen größeren Grad an Quervernetzungen besitzt.

Ein grundlegend anderes Verfahren umfasst das Erhitzen des Gewebes in einer wässrigen Lösung, wobei dieses Verfahren auch als hitzeinduziertes Antigen-Retrieval (HIAR) oder hitzeinduziertes Epitop-Retrieval (HIER) bekannt ist. Diese Vorbehandlungsmethode ist nicht so stark von der Fixierungszeit abhängig wie das proteolytische Verfahren und wird häufiger eingesetzt. Die hohe Temperatur beschleunigt die Hydrolyse der Aldehyd-induzierten Modifikationen und das freigesetzte Aldehyd wird im Wasser verdünnt, so dass es nicht wieder mit den Proteinen reagiert.

In der Regel liegen typische Siedetemperaturen beim HIER bei 95-99° C für eine Zeit zwischen 20 und 40 Minuten, abhängig vom Antigen. Hinzu kommt eine Abkühlzeit von ungefähr 20 Minuten, so dass keine Gefahr besteht, dass die Probe austrocknet. Das Erwärmen des Objektträgers und der Antigen-Retrieval-Lösung in einem Dampfkocher oder einer ähnlichen Druckvorrichtung kann die Siedezeit reduzieren. Hier kann das Gewebe auf Temperaturen über 100° C erhitzt werden. Trotz der relativ kurzen Siedezeit ist das gesamte HIER-Protokoll ähnlich lang wie das proteolytische Verfahren.

Neben destilliertem Wasser werden in den Antigen-Retrieval-Verfahren routinemäßig viele Reagenzien verwendet, z.B. Tris, Harnstoff, EDTA, Citrat und Salzpuffer. Darüber hinaus enthalten viele Lösungen Detergenzien, wobei die Auswahl sowohl ionische als auch nicht-ionische Tenside umfasst.

Obwohl das hitzeinduzierte Antigen-Retrieval die Gewebeantigenizität für eine Vielzahl von Antikörpern wiederherstellt, bestehen bei der Automatisierung des Verfahrens gravierende Nachteile. Die Verwendung von fast siedenden Puffern in einem Tank ist schwierig in ein immunhistochemisches Färbeinstrument zu integrieren. Das Einpumpen und Entleeren des Puffers und das Erwärmen der Pufferlösung ist zeitaufwendig und der mit dem Aufkochen des Gewebes verbundene Energieverbrauch ist sehr hoch. Die Wasserverdampfung aus der Pufferlösung ist hoch, und während der Inkubationszeit muss zusätzlicher Puffer hinzugefügt werden. Darüber hinaus kann der Dampf Verbrennungen bei den Bedienern verursachen und er kondensiert in anderen Teilen des Instruments, wo die elektronischen Schaltkreise des Instruments gefährdet sein können.

Insgesamt tragen diese Prozesse wesentlich zur Komplexität (und folglich zu höheren Anschaffungskosten) eines Anfärbeinstruments bei. Ventana Medical Systems verwendet auf dem Benchmark®-Instrument ein horizontales Target-Retrieval-Verfahren, bei dem der wässrige Puffer auf dem Objektträger mit einem Öl, dem sogenannten Liquid Coverslip™, bedeckt ist, um die Verdampfung während des Erhitzens zu reduzieren. Darüber hinaus wird die Luftfeuchtigkeit im Gerät bei nahe 100% gehalten. Ein anderes Beispiel für ein Instrument, das sowohl Antigen-Retrieval als auch Färbung ausführt, ist das Bond-Max® von Leica Biosystems. Hier wird eine Abdeckplatte verwendet, die über einer Folie platziert wird.

Bei beiden oben genannten Instrumenten besteht das Problem, dass jede Flüssigkeit bei einer Temperatur nahe ihrer Siedetemperatur relativ schnell verdampft und beide Instrumente erfordern die Verwendung einer Abdeckung über der Probe.

Anstatt die Probe auf einem Objektträger mit nur einer geringen Menge einer Antigen-Retrieval-Lösung zu überschichten, ist es alternativ möglich den Objektträger mit Probe in einer Inkubationsvorrichtung aufzunehmen und anschließend in einer größeren Lösungsmenge zu inkubieren. In einem solchen System stellt die verdampfende Flüssigkeit kein Problem dar, allerdings muss das Material der Inkubationsvorrichtung vielen verschiedenen Anforderungen genügen. Insbesondere muss das Inkubationsvorrichtungsmaterial formstabil sein, Wärme sehr gut leiten, schnell abkühlen, inert gegen verschiedene Chemikalien und Flüssigkeiten sein und einen spezifischen Kontaktwinkel besitzen, um ein optimales In-Kontakt-Bringen zwischen Probe und Antigen-Retrieval-Lösungen zu gewährleisten. Nur eine Kombination aller genannten Eigenschaften liefert ein optimales Antigen-Retrieval- und Färbeergebnis.

Daher besteht Bedarf an Vorrichtungen und Verfahren, die das Inkubieren von Objektträgern mit Proben in einer größeren Puffer-/Lösungsmenge im Kontext von Target-Retrieval- und Färbeverfahren ermöglichen.

Vorrichtungen, Verfahren und Verwendungen, die spezifische Materialeigenschaften für eine Inkubationsvorrichtung offenbaren, werden nachfolgend beschrieben und sind Gegenstand der vorliegenden Erfindung.

Die Erfinder der vorliegenden Erfindung haben überraschenderweise Grenzwerte für physikalische Materialeigenschaften definieren können, die es erlauben festzustellen, ob ein gegebenes Material als Material für eine Inkubationsvorrichtung für einen Objektträger in Target-Retrieval- und Färbeverfahren geeignet ist. Diese Grenzwerte könnten aufgrund diverser Experimente mit einer Vielzahl unterschiedlicher Materialien definiert werden. Des Weiteren stellte sich in den Versuchsreihen ein Kompositmaterial, das Grafit, Kohlefaser, Sulfidpolymer und halogeniertes aromatisches Polymer umfasst, als besonders geeignetes Inkubationsvorrichtungsmaterial heraus.

In einem ersten Aspekt richtet sich die vorliegende Erfindung daher auf eine Inkubationsvorrichtung für einen Objektträger, wobei die Inkubationsvorrichtung (i) eine erste Einheit umfasst, um den Objektträger reversibel aufzunehmen, und (ii) eine zweite Einheit umfasst, um den aufgenommenen Objektträger mit einer Flüssigkeit in Kontakt zu bringen und das Inkubationsvorrichtungsmaterial a) eine Schmelztemperatur von mindestens 150° C; b) eine spezifische Wärmekapazität von höchstens 1,0 J/(g*K); c) eine Wärmeleitfähigkeit von mindestens 0,4 W/(K*m); d) eine Wasseraufnahme von weniger als 0,1 %; und e) einen Kontaktwinkel zwischen 45° bis 80° besitzt.

In bevorzugten Ausführungsformen der Erfindung ist das Inkubationsvorrichtungsmaterial ein Kompositmaterial, das mindestens drei, bevorzugt alle, Komponenten aus der Gruppe bestehend aus Grafit, Kohlefaser, Sulfidpolymer und halogeniertes aromatisches Polymer umfasst oder aus diesen besteht.

In bevorzugten Ausführungsformen (i) umfasst das Sulfidpolymer aromatische Kohlenstoffringe und ist weiter bevorzugt Polyphenylensulfid (PPS); und/oder (ii) ist das halogenierte aromatische Polymer ein fluoriertes Polymer, bevorzugt Polytetrafluorethylen (PTFE).

In weiteren bevorzugten Ausführungsformen weist die Inkubationsvorrichtung eine Einlassöffnung und eine Auslassöffnung auf und diese Öffnungen sind über die zweite Einheit der Inkubationsvorrichtung fluidisch miteinander verbunden.

In bevorzugten Ausführungsformen (i) weist die Inkubationsvorrichtung ein Gewicht zwischen 5 und 40 Gramm, bevorzugt zwischen 15 und 25 Gramm auf; und/oder (ii) die Inkubationsvorrichtung besteht aus mindestens zwei Teilen.

Ferner ist die Inkubationsvorrichtung in bevorzugten Ausführungsformen inert gegen Xylol.

In einem zweiten Aspekt richtet sich die vorliegende Erfindung auf ein Inkubationssystem umfassend (i) die Inkubationsvorrichtung der vorliegenden Erfindung, und (ii) eine Reservoirvorrichtung, die die Flüssigkeit, mit der der Objektträger in Kontakt gebracht werden soll, bereitstellt.

In bevorzugten Ausführungsformen sind die Inkubationsvorrichtung und die Reservoirvorrichtung fluidisch miteinander verbunden.

In einem dritten Aspekt richtet sich die vorliegende Erfindung auf die Verwendung eines Kompositmaterials zur Herstellung einer Inkubationsvorrichtung für einen Objektträger, wobei das Kompositmaterial a) eine Schmelztemperatur von mindestens 150° C; b) eine spezifische Wärmekapazität von höchstens 1,0 J/(g*K); c) eine Wärmeleitfähigkeit von mindestens 0,4 W/(K*m); d) eine Wasseraufnahme von weniger als 0,1 %; und e) einen Kontaktwinkel zwischen 45° bis 80° besitzt.

Die erfindungsgemäße Verwendung umfasst bevorzugte Ausführungsformen, wobei das Kompositmaterial mindestens drei, bevorzugt alle, Komponenten aus der Gruppe bestehend aus Grafit, Kohlefaser, Sulfidpolymer und halogeniertes aromatisches Polymer umfasst oder aus diesen besteht.

Ferner sind bevorzugte Ausführungsformen umfasst, wobei (i) das Sulfidpolymer aromatische Kohlenstoffringe umfasst und bevorzugt Polyphenylensulfid (PPS) ist; (ii) das halogenierte aromatische Polymer ein fluoriertes Polymer, bevorzugt Polytetrafluorethylen (PTFE) ist; und/oder (iii) das Kompositmaterial gegen Xylol inert ist.

In einem vierten Aspekt richtet sich die vorliegende Erfindung auf ein Verfahren zum Färben einer Probe auf einem Objektträger, wobei das Verfahren die folgenden Schritte umfasst: (i) Aufnehmen des Objektträgers mit Probe in die erfindungsgemäße Inkubationsvorrichtung; und (ii) in Kontakt Bringen der Probe mit einer Färbelösung.

In bevorzugten Ausführungsformen ist die Probe ein biologisches Material.

In weiteren bevorzugten Ausführungsformen umfasst die Färbelösung Antikörper, Hämatoxylin, Eosin, Eisenhämatoxylin, Azokarmin, Methylenblau, Toluidinblau, Anilinblau, Pikrinsäure, Säurefuchsin, Kongorot, Perjodsäure, Silber, Orange G, Kaliumhexacyanoferrat, Diaminobenzidin (DAB), Kernechtrot oder Kombinationen davon.

Ein erster Aspekt der vorliegenden Erfindung richtet sich auf eine Inkubationsvorrichtung für einen Objektträger, wobei die Inkubationsvorrichtung (i) eine erste Einheit umfasst, um den Objektträger reversibel aufzunehmen, und (ii) eine zweite Einheit umfasst, um den aufgenommenen Objektträger mit einer Flüssigkeit in Kontakt zu bringen und das Inkubationsvorrichtungsmaterial a) eine Schmelztemperatur von mindestens 150° C; b) eine spezifische Wärmekapazität von höchstens 1,0 J/(g*K); c) eine Wärmeleitfähigkeit von mindestens 0,4 W/(K*m); d) eine Wasseraufnahme von weniger als 0,1 %; und e) einen Kontaktwinkel zwischen 45° bis 80° besitzt.

Durch eine Vielzahl von Experimenten mit unterschiedlichen Materialien könnten die Erfinder der vorliegenden Erfindung physikalische Grenzwerte für Materialeigenschaften definieren, die es erlauben, ein geeignetes Material für eine Inkubationsvorrichtung für einen Objektträger in Target-Retrieval- und Färbeverfahren zu finden. Des Weiteren stellte sich in den Versuchsreihen ein Kompositmaterial, das Grafit, Kohlefaser, Sulfidpolymer und halogeniertes aromatisches Polymer umfasst oder aus diesen besteht, als besonders geeignetes Inkubationsvorrichtungsmaterial heraus.

Der Ausdruck "Objektträger", wie vorliegend verwendet, bezieht sich auf einen Träger, auf den ein zu mikroskopierendes Objekt gelegt werden kann. Bevorzugt besteht der Objektträger aus Glas, Kunststoffpolymer, Metall oder einer Mischung dieser Materialien. Weiter bevorzugt besteht der Objektträger aus Glas, Kunststoffpolymer oder einer Mischung dieser Materialien und ist (zumindest teilweise) durchlässig für Menschen sichtbare elektromagnetische Strahlung, Ultraviolettstrahlung und Infrarotstrahlung (z.B. 10 - 780 nm).

"Reversibel aufnehmen", wie hierin verwendet, bedeutet, dass die erfindungsgemäße Vorrichtung mit einem anderen Objekt (z.B. dem Objektträger) in Kontakt gebracht wird und dieser Kontakt zu einem späteren Zeitpunkt ohne signifikante Beschädigung der Vorrichtung und des anderen Objekts wieder gelöst werden kann. Der Kontakt der erfindungsgemäßen Vorrichtung und des anderen Objekts kann bevorzugt durch Auflegen des Objekts auf die Vorrichtung oder durch Fixieren (beispielsweise klemmen, festschrauben etc.) des Objekts an der Vorrichtung erzielt werden.

In bevorzugten Ausführungsformen umfasst die erfindungsgemäße Inkubationsvorrichtung einen Objektträger.

Der Ausdruck "Objektträger mit einer Flüssigkeit in Kontakt bringen", wie hierin verwendet, bedeutet, dass der gesamte Objektträger oder bestimmte Teile des Objektträgers so positioniert werden, dass ein Kontakt zu einer Flüssigkeit, bevorzugt eine Färbe- und/oder Waschlösung, entsteht. In bevorzugten Ausführungsformen umfasst der Objektträger ein Probenmaterial auf seiner Oberfläche und dieses Probenmaterial und der Objektträger kontaktieren die Flüssigkeit. In weiter bevorzugten Ausführungsformen strömt die Flüssigkeit über den Objektträger und das Probenmaterial.

Der Ausdruck "Schmelztemperatur", wie hierin verwendet, richtet sich auf die Temperatur, bei der das Material der erfindungsgemäßen Vorrichtung schmilzt, das heißt vom festen in den flüssigen Aggregatzustand übergeht. Diese Schmelztemperatur der Inkubationsvorrichtung beträgt mindestens 150° C, mindestens 155° C, mindestens 160° C, mindestens 165° C, mindestens 170° C, mindestens 175° C, mindestens 180° C, mindestens 185° C, mindestens 190° C, mindestens 195° C, mindestens 200° C, mindestens 205° C, mindestens 210° C, mindestens 230° C, mindestens 250° C oder mindestens 280° C. Dem Fachmann sind viele verschiedene Verfahren zur Bestimmung der Schmelztemperatur bekannt. Beispielsweise 1) die Apparatur nach Thiele, bei der die Probe in einem gerührten oder durch Konvektion strömenden Ölbad geschmolzen wird; 2) die Apparatur gemäß Deutsches Arzneimittelbuch (DAB), mit Normschliff 29/32, bestehend aus Kolben von ca. 100 ml und Einsatzrohr mit Entlüftungsloch; 3) die Apparatur nach C.F. Linström, wobei die Probe in einem Kupferblock bis zum Schmelzpunkt erwärmt wird; 4) Heiztischapparatur nach Kofler (Kofler-Heizbank); und 5) Dynamische Differenzkalorimetrie (DSC). Bevorzugt wird die Schmelztemperatur gemäß DIN EN ISO 11357 bestimmt.

"Spezifische Wärmekapazität", wie hierin verwendet, bezieht sich auf die Fähigkeit des Inkubationsvorrichtungsmaterials, thermische Energie zu speichern. Die spezifische Wärmekapazität des Inkubationsvorrichtungsmaterials ist höchstens 1,0 J(g*K), höchstens 0,99 J(g*K), höchstens 0,98 J(g*K), höchstens 0,97 J(g*K), höchstens 0,96 J(g*K), höchstens 0,94 J(g*K), höchstens 0,92 J(g*K) oder höchstens 0,90 J(g*K). Beispiele für die Bestimmung der spezifischen Wärmekapazität mit Hilfe eines Kalorimeters sind die Mischungsmethode oder die Aufheizmethode, die dem Fachmann hinlänglich bekannt sind. Bevorzugt wird die spezifische Wärmekapazität gemäß ISO 22007-4:2008 bestimmt.

Der Ausdruck "Wärmeleitfähigkeit" oder "Wärmeleitkoeffizient, wie hierin austauschbar verwendet, bezieht sich auf die Eigenschaft des Inkubationsvorrichtungsmaterials wie effizient ein Wärmestrom durch das Material geleitet wird. Je niedriger der Wert der Wärmeleitfähigkeit ist, desto besser ist die Wärmedämmung des Materials. Vorliegend beträgt die Wärmeleitfähigkeit des Inkubationsvorrichtungsmaterials mindestens 0,4 W/(K*m), mindestens 0,42 W/(K*m), mindestens 0,44 W/(K*m), mindestens 0,46 W/(K*m), mindestens 0,48 W/(K*m), mindestens 0,5 W/(K*m), mindestens 0,52 W/(K*m), mindestens 0,54 W/(K*m), mindestens 0,56 W/(K*m) oder mindestens 0,58 W/(K*m). Dem Fachmann sind Geräte zum Messen der Wärmeleitfähigkeit bekannt (sogenannte Wärmestrommesser und andere Wärmestromkalorimeter). Diese messen eine dem Wärmestrom entsprechende elektrische Leistung eines Heizelements, die Dicke einer Probe und die Temperaturdifferenz an einer definierten Messfläche. Bevorzugt wird die Wärmeleitfähigkeit gemäß ISO 22007-4:2008 bestimmt.

"Wasseraufnahme", wie hierin verwendet, bezieht sich auf die Menge an Wasser, die das Inkubationsvorrichtungsmaterial bei gegeben Inkubationsbedingungen aufnimmt. Der angegebene Wert ist die prozentuale Gewichtszunahme im Vergleich zum Ausgangsgewicht des untersuchten Objekts. Die Wasseraufnahme des Inkubationsvorrichtungsmaterials beträgt weniger als 0,1 %, weniger als 0,09 %, weniger als 0,08 %, weniger als 0,07 %, weniger als 0,06 %, weniger als 0,05 %, weniger als 0,04 %, weniger als 0,03 %, weniger als 0,02 % oder weniger als 0,01 %. Bevorzugt wird die Messung der Wasseraufnahme für 24 Stunden oder 96 Stunden bei 23° C durchgeführt. Weiter bevorzugt wird die Wasseraufnahme gemäß DIN EN ISO 62 mit einem Objekt, das einen Durchmesser von 50 mm und eine Höhe von 13 mm hat, bestimmt.

Der Ausdruck "Kontaktwinkel", wie hierin verwendet, bezeichnet den Winkel, den ein Flüssigkeitstropfen auf der Oberfläche eines Inkubationsvorrichtungsmaterials zu dieser bildet. Der Kontaktwinkel des Materials der erfindungsgemäßen Inkubationsvorrichtung liegt zwischen 45° bis 80°, zwischen 50° bis 79°, zwischen 55° bis 78°, zwischen 60° bis 77°, zwischen 65° bis 76°, zwischen 70° bis 75° oder zwischen 73° bis 74°. Geräte und Verfahren den Kontaktwinkel eines Materials zu messen, sind dem Fachmann bekannt. Beispielhaft wird das Kontaktwinkelmessgerät Drop Shape Analyzer DSA30 (Krüss GmbH, Hamburg, Deutschland) genannt. Bevorzugt wird zusammen mit diesem Gerät Aqua dest. verwendet, wobei das zu messende Material mit mindestens fünf Tropfen versehen und jeder dieser Tropfen mindestens sieben Mal gemessen wird, so dass ein Mittelwert aus allen Messungen gebildet werden kann.

In bevorzugten Ausführungsformen der Erfindung ist das Inkubationsvorrichtungsmaterial ein Kompositmaterial, das mindestens drei, bevorzugt alle, Komponenten aus der Gruppe bestehend aus Grafit, Kohlefaser, Sulfidpolymer und halogeniertes aromatisches Polymer umfasst oder aus diesen besteht.

Der Ausdruck "Kompositmaterial" oder "Verbundwerkstoff', wie hierin austauschbar verwendet, bezieht sich auf einen Werkstoff aus zwei oder mehr verbundenen Materialien, der andere Werkstoffeigenschaften besitzt als seine einzelnen Komponenten. Das Kompositmaterial, das die erfindungsgemäße Inkubationsvorrichtung umfasst oder aus dem sie besteht, umfasst mindestens drei oder mindestens vier verschiedene Ausgangsmaterialien. Diese werden bevorzugt aus der Gruppe bestehend aus Grafit, Kohlefaser, Sulfidpolymer und halogeniertes aromatisches Polymer ausgewählt. Dabei bezieht sich der Ausdruck "Grafit" auf die kristalline Struktur von Kohlenstoff, die zwei polytype Schichten, nämlich Grafit-2H und Grafit-3R, umfasst. "Kohlefaser", wie hierin verwendet, sind Fasern aus kohlenstoffhaltigen Ausgangsmaterialien, die durch eine an den Rohstoff angepasste chemische Reaktionen in graphitartig angeordneten Kohlenstoff umgewandelt werden und ihre faserartige Struktur beibehalten. Beispielhafte Ausgangsmaterialien können Pflanzenfasern, Cellulose, Polyacrylnitril (PAN) oder Pech sein. Der Ausdruck "Sulfidpolymer", wie hierin verwendet, bezieht sich auf ein Polymer mit einer Vielzahl von sich wiederholenden Einheiten, wobei die Einheit mindestens eine Sulfidgruppe (Thioether) umfasst. Bevorzugt ist die Einheit ein organisches Molekül, das überwiegend Kohlenstoffatome umfasst. "Halogeniertes aromatisches Polymer", wie hierin verwendet, bezieht sich auf ein Polymer mit einer Vielzahl von sich wiederholenden Einheiten, wobei die Einheit mindestens eine aromatische Gruppe und mindestens ein Halogen umfasst. Bevorzugt ist die aromatische Gruppe ein (weiter bevorzugt 5- oder 6-gliedriger) Kohlenstoffring. In weiteren Ausführungsformen kann das Halogen bevorzugt aus der Gruppe bestehend aus Fluor, Chlor, Brom und Jod ausgewählt sein.

In bevorzugten Ausführungsformen (i) umfasst das Sulfidpolymer aromatische Kohlenstoffringe (weiter bevorzugt 5- oder 6-gliedrige Kohlenstoffringe) und ist weiter bevorzugt Polyphenylensulfid (PPS); und/oder (ii) ist das halogenierte aromatische Polymer ein fluoriertes Polymer, bevorzugt Polytetrafluorethylen (PTFE). In weiteren bevorzugten Ausführungsformen des Kompositmaterials besitzt das Sulfidpolymer (z.B. PPS) den höchsten Massenanteil in Gewichtsprozent von allen Ausgangsmaterialien. Bevorzugt liegt die Dichte des Materials der erfindungsgemäßen Inkubationsvorrichtung zwischen 0,5 g/cm³ und 2,5 g/cm³, zwischen 0,7 g/cm³ und 2,3 g/cm³, zwischen 0,9 g/cm³ und 2,1 g/cm³, zwischen 1,1 g/cm³ und 1,9 g/cm³, zwischen 1,3 g/cm³ und 1,7 g/cm³ und zwischen 1,4 g/cm³ und 1,6 g/cm³. In weiter bevorzugten Ausführungsformen ist das Material der erfindungsgemäßen Inkubationsvorrichtung ein Kompositmaterial, das Grafit, Kohlefaser, Polyphenylensulfid (PPS) und Polytetrafluorethylen (PTFE) umfasst oder aus diesen besteht. Ferner ist in bevorzugten Ausführungsformen das Material der erfindungsgemäßen Inkubationsvorrichtung TECATRON PVX black, wie es kommerziell von der Firma Ensinger (Ensinger GmbH, Nufringen, Deutschland) angeboten wird.

In weiteren bevorzugten Ausführungsformen weist die Inkubationsvorrichtung eine Einlassöffnung und eine Auslassöffnung auf und diese Öffnungen sind über die zweite Einheit der Inkubationsvorrichtung fluidisch miteinander verbunden.

Eine "Einlassöffnung", wie hierin verwendet, bezieht sich auf eine Öffnung in der Inkubationsvorrichtung, durch die Flüssigkeit von außerhalb der Vorrichtung in diese eingeführt werden kann. Durch die "Auslassöffnung" kann diese Flüssigkeit die erfindungsgemäße Vorrichtung wieder verlassen. Dabei kann sowohl der Vorgang des Einlassens sowie des Entfernens der Flüssigkeit über das Bereitstellen eines hydrostatischen Druckpotentials als auch über den Einsatz einer unterstützenden Pumpe erreicht werden. Die Begriffe "fluidisch miteinander verbunden" oder "fluidisch gekoppelt", wie hierin austauschbar verwendet, bedeuten, dass die Einlassöffnung und die Auslassöffnung entweder direkt oder indirekt (z.B. über weitere Teile der Inkubationsvorrichtung oder über ein weiteres Gerät durch Rohrleitungen, Leitungen, Drähte oder dergleichen) in Verbindung stehen oder miteinander verbunden sind.

In bevorzugten Ausführungsformen (i) weist die Inkubationsvorrichtung ein Gewicht zwischen 5 und 40 Gramm, bevorzugt zwischen 15 und 25 Gramm auf; und/oder (ii) die Inkubationsvorrichtung besteht aus mindestens zwei Teilen. In bevorzugten Ausführungsformen besteht die erfindungsgemäße Inkubationsvorrichtung aus zwei, drei, vier, fünf, sechs, sieben, acht, neun, zehn oder mehr Teilen.

Ferner ist die Inkubationsvorrichtung in bevorzugten Ausführungsformen inert gegen Xylol. "Inert gegen Xylol", wie hierin verwendet, bedeutet, dass das Inkubationsvorrichtungsmaterial keine oder nur in geringem Maße eine Reaktion mit Xylol eingeht, wenn beide miteinander inkubiert werden. In bevorzugten Ausführungsformen findet die Inkubation bei Raumtemperatur für eine, zwei oder drei Stunden statt.

In einem zweiten Aspekt richtet sich die vorliegende Erfindung auf ein Inkubationssystem umfassend (i) die Inkubationsvorrichtung der vorliegenden Erfindung, und (ii) eine Reservoirvorrichtung, die die Flüssigkeit, mit der der Objektträger in Kontakt gebracht werden soll, bereitstellt. Der Ausdruck "Reservoirvorrichtung", wie hierin verwendet, bezieht sich auf eine Vorrichtung, die eine gegebene Menge an Flüssigkeit aufnehmen und an die erfindungsgemäße Inkubationsvorrichtung abgeben kann. Bevorzugt kann die Reservoirvorrichtung mindestens 10 ml, mindestens 20 ml, mindestens 30 ml, mindestens 40 ml, mindestens 50 ml, mindestens 100 ml, mindestens 150 ml, mindestens 200 ml, mindestens 250 ml, mindestens 300 ml, mindestens 400 ml, mindestens 500 ml, mindestens 700 ml, mindestens 900 ml, mindestens 1000 ml, mindestens 1300 ml, mindestens 1500 ml, mindestens 1700 ml, 2000 ml, mindestens 2500 ml oder mindestens 3000 ml Flüssigkeit aufnehmen und abgeben. Die Flüssigkeit kann von der Reservoirvorrichtung in die Inkubationsvorrichtung über ein hydrostatisches Druckgefälle oder über eine Pumpe befördert werden.

In bevorzugten Ausführungsformen sind die Inkubationsvorrichtung und die Reservoirvorrichtung fluidisch miteinander verbunden.

Alle bevorzugten Ausführungsformen des ersten Aspekts der vorliegenden Erfindung treffen gleichermaßen auf den zweiten Aspekt der Erfindung zu.

In einem dritten Aspekt richtet sich die vorliegende Erfindung auf die Verwendung eines Kompositmaterials zur Herstellung einer Inkubationsvorrichtung für einen Objektträger, wobei das Kompositmaterial a) eine Schmelztemperatur von mindestens 150° C; b) eine spezifische Wärmekapazität von höchstens 1,0 J/(g*K); c) eine Wärmeleitfähigkeit von mindestens 0,4 W/(K*m); d) eine Wasseraufnahme von weniger als 0,1 %; und e) einen Kontaktwinkel zwischen 45° bis 80° besitzt.

Die erfindungsgemäße Verwendung umfasst bevorzugte Ausführungsformen, wobei das Kompositmaterial mindestens drei, bevorzugt alle, Komponenten aus der Gruppe bestehend aus Grafit, Kohlefaser, Sulfidpolymer und halogeniertes aromatisches Polymer umfasst oder aus diesen besteht.

Ferner sind bevorzugte Ausführungsformen umfasst, wobei (i) das Sulfidpolymer aromatische Kohlenstoffringe umfasst und bevorzugt Polyphenylensulfid (PPS) ist; (ii) das halogenierte aromatische Polymer ein fluoriertes Polymer, bevorzugt Polytetrafluorethylen (PTFE) ist; und/oder (iii) das Kompositmaterial gegen Xylol inert ist.

Alle bevorzugten Ausführungsformen des ersten Aspekts der vorliegenden Erfindung treffen gleichermaßen auf den dritten Aspekt der Erfindung zu.

In einem vierten Aspekt richtet sich die vorliegende Erfindung auf ein Verfahren zum Färben einer Probe auf einem Objektträger, wobei das Verfahren die folgenden Schritte umfasst: (i) Aufnehmen des Objektträgers mit Probe in die erfindungsgemäße Inkubationsvorrichtung; und (ii) in Kontakt Bringen der Probe mit einer Färbelösung.

Der Ausdruck "Färbelösung", wie hierin verwendet, bezieht sich auf flüssige Medien, in denen Stoffe oder Gemische von Stoffen gelöst sind, die es ermöglichen Gewebe, Zellen, Zellstrukturen (wie beispielsweise den Kern, Mitochondrien, Nukleoli, endoplasmatisches Retikulum, PML-Kernkörper usw.) und Proteinkomplexe oder auch einzelne Proteine in Zellen und/oder Gewebe zu färben.

Ferner kann dem vorliegenden Färbeverfahren ein Antigen-Retrieval vorausgehen. In besonders bevorzugten Ausführungsformen ist das Antigen-Retrieval ein hitzeinduziertes Antigen-Retrieval (HIAR).

In bevorzugten Ausführungsformen ist die Probe ein biologisches Material. "Biologisches Material", wie hier verwendet, bezieht sich auf Materialien, die von lebenden Organismen isoliert oder abgeleitet werden können. Beispiele für biologische Materialien schließen Proteine, Zellen, Gewebe, Organe, zellbasierte Konstrukte oder Kombinationen davon ein, sind jedoch nicht darauf beschränkt. In bevorzugten Ausführungsformen kann sich biologisches Material auf Säugetierzellen oder Gewebeschnitte beziehen. In weiter bevorzugten Ausführungsformen kann der Gewebeschnitt Epithelgewebe, Binde- und Stützgewebe, Muskelgewebe, Nervengewebe und/oder Kombinationen davon enthalten. In anderen Ausführungsformen kann sich biologisches Material auf Fortpflanzungszellen beziehen, einschließlich Spermazellen, Spermatozyten, Oozyten, Eizelle, Embryonen, Keimvesikel oder Kombinationen davon. In weiteren bevorzugten Ausführungsformen kann sich biologisches Material auf Vollblut, rote Blutkörperchen, weiße Blutkörperchen, Blutplättchen, Urin, Cerebrospinalflüssigkeit (CSF), Lymphe, Viren, Bakterien, Algen, Pilze oder Kombinationen davon beziehen.

In weiteren bevorzugten Ausführungsformen umfasst die Färbelösung Antikörper, Hämatoxylin, Eosin, Eisenhämatoxylin, Azokarmin, Methylenblau, Toluidinblau, Anilinblau, Pikrinsäure, Säurefuchsin, Kongorot, Perjodsäure, Silber, Orange G, Kaliumhexacyanoferrat, Diaminobenzidin (DAB), Kernechtrot oder Kombinationen davon.

Alle bevorzugten Ausführungsformen des ersten Aspekts der vorliegenden Erfindung treffen gleichermaßen auf den vierten Aspekt der Erfindung zu.

Der Ausdruck "Antigen", wie hierin verwendet, bezieht sich bevorzugt auf Stoffe, an die sich Antikörper und bestimmte Lymphozyten-Rezeptoren spezifisch binden können. Antigene können Proteine, aber auch Glykoproteine, Kohlenhydrate, Lipide oder andere Stoffe sein. Vorliegend sind die Antigene bevorzugt Proteine oder posttranslational modifizierte Proteine.

Für die Durchführung eines Antigen-Retrieval- und Färbeverfahrens wird ein Inkubationssytem (9) verwendet, das das eine erfindungsgemäße Inkubationsvorrichtung (1), gefertigt aus TECATRON PVX black (Ensinger GmbH, Nufringen, Deutschland), und eine Reservoirvorrichtung (8) umfasst, durch die sämtliche unten genannten Flüssigkeiten gelagert und zur Verfügung gestellt werden. Es wird Lymphknotengewebe aus Schwein mit einem Ki67 Antikörper (Klon Mib1, Dako, 1:500 verdünnt) und Lilli's Hämatoxylin (1:20 verdünnt) gefärbt.

Zunächst wird das Gewebe des Schweins durch Formaldehydbehandlung fixiert, anschließend paraffiniert (d.h. in einen Block aus Paraffin eingebettet) und durch ein Mikrotom in Schnitte von 2-5 µm dicke geschnitten. Diese Schnitte werden auf einem silanisierten Objektträger (2) mit Neo-Mount® (Merck) platziert. Der Objektträger (2) mit Gewebeprobe wird mit seinen Enden auf eine erste Einheit (3) der Inkubationsvorrichtung gelegt und reversibel fixiert.

Für eine Färbung/Markierung von Antigenen, wie Ki67, ist ein Antigen-Retrieval vorteilhaft bzw. obligatorisch. Dem eigentlichen hitzeinduzierten Epitop-Retrieval (HIER) geht ein Entparaffinierungsschritt voraus. Für diesen Schritt wird die Gewebeprobe jeweils in mehreren Durchgängen für 1 bis 5 Minuten mit NeoClear® (Merck), 99 % Ethanol (EtOH) und 1 % Methylethylketon (MEK), 95 % EtOH und Reinstwasser gewaschen.

Für das Antigen-Retrieval wird die Inkubationsvorrichtung (1) in einem Dampfgarer platziert. Die Gewebeprobe wird mit einer HIER-Lösung (Tris/EDTA + 35 % Glycerin, pH 9) überschichtet und für ca. 30 Minuten bei 97° C (+/- 2° C) inkubiert. Anschließend wird die Gewebeprobe für 20 Minuten bei Raumtemperatur wieder abgekühlt.

Erfolgt die spätere Färbung/Detektion der Antigene (hier Ki67) über ein Peroxidase-Nachweissystem, so muss die endogene Peroxidase des Schweinegewebes blockiert werden. Eine solche Inhibierung kann durch die Verwendung von Wasserstoffperoxid (H₂O₂) erfolgen.

Wie alle hier verwendeten Flüssigkeiten (7) (z.B. HIER-Lösung, Färbelösungen, Waschlösungen usw.), wird diese in die Reservoirvorrichtung (8) gegeben. Von dort aus kann die Flüssigkeit (7) über eine Einlassöffnung (5) in die Inkubationsvorrichtung (2) gelangen. Anschließend strömt die Flüssigkeit (7) durch die zweite Einheit (6) der Inkubationsvorrichtung (2), so dass der Flüssigkeitsstrom mit der auf dem Objektträger (2) platzierten Gewebeprobe in Kontakt kommt. Die Flüssigkeit verlässt dann über die Auslassöffnung (6) die erfindungsgemäße Inkubationsvorrichtung (1). Alternativ kann die Flüssigkeit (7) auch für einen längeren Zeitraum in der zweiten Einheit der Inkubationsvorrichtung zur Inkubation gehalten werden. In anderen alternativen Ausführungsformen wird die Flüssigkeit (7) nicht über die Reservoirvorrichtung (8) in die Inkubationsvorrichtung (1) überführt, sondern durch ein direktes befüllen der zweiten Einheit (4) der Inkubationsvorrichtung (1).

Nach dem Blockieren der endogenen Peroxidase wird die Gewebeprobe mit Ki67 Antikörper inkubiert. Das Antigen Ki67 wird während der aktiven G(1)-, S-, G(2)- und M-Phase des Zellzyklus exprimiert, fehlt aber in der G(0)-Phase von ruhenden Zellen. So kann in einer Zellpopulation der Anteil an sich teilenden Zellen bestimmt werden. Für viele Krebsarten, insbesondere Brustkrebs, kann Ki67 daher als Biomarker dienen.

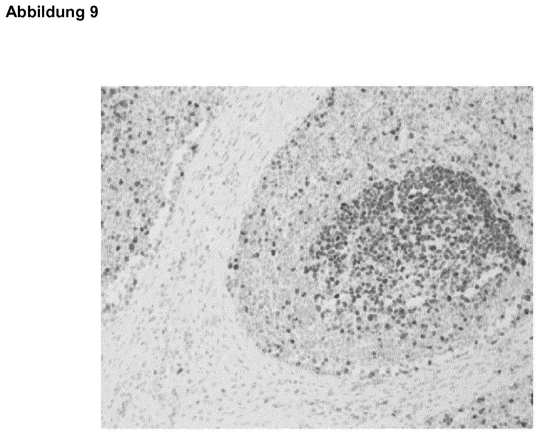

Anschließend wird die Gewebeprobe mit einem Konjugat aus sekundären Antikörper und Meerrettich-Peroxidase und einer Substratlösung mit Chromogen inkubiert und jeweils gewaschen. Zusätzlich wird die Gewebeprobe mit Lilli's Hämatoxylin (1:20 verdünnt) gefärbt. Diese Gegenfärbung ermöglicht das Einfärben von Zell- und Gewebestrukturen, wie z. B. Zellkernen, Mitochondrien, Myelin, Elastin und Kollagenfasern. Nach der Hämatoxylin-Behandlung wird die Gewebeprobe wieder in jeweils mehreren Schritten mit NeoClear® (Merck), 99 % Ethanol (EtOH) / 1 % Methylethylketon (MEK) und 95 % EtOH behandelt. Danach kann die Gewebeprobe unter einem Mikroskop betrachtet werden. Abbildung 9 zeigt stellvertretend eine Aufnahme von Lymphknotengewebe aus Schwein, das einem erfolgreichen Antigen-Retrieval und einer anschließenden Färbung mit Ki67 Antikörper und Hämatoxylin unterzogen wurde.

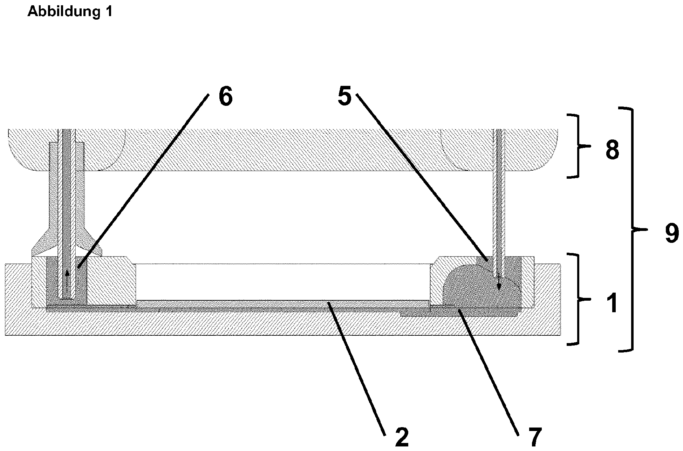

**Abbildung 1** zeigt den Querschnitt durch ein erfindungsgemäßes Inkubationssystem (9) mit seinen Teilen Inkubationsvorrichtung (1) und Reservoirvorrichtung (8).

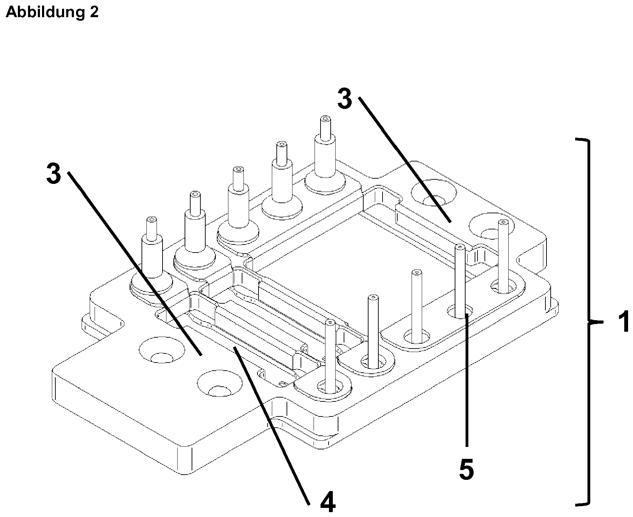

**Abbildung 2** zeigt die Ansicht einer erfindungsgemäßen Inkubationsvorrichtung (1).

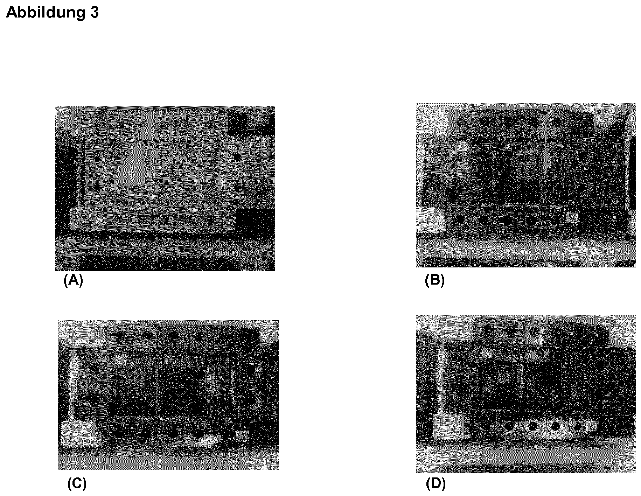

**Abbildung 3** zeigt die Ansicht von vier stellvertretend ausgewählten Inkubationsvorrichtungen, die jeweils aus anderen Materialien gefertigt wurden (A = Polyketon; B = Tecatron GF40 natural (Ensinger GmbH, Nufringen, Deutschland); C = Tecatron PVX black (Ensinger GmbH, Nufringen, Deutschland); D = Polyphenylensulfon (PPSU)).
**Abbildung 4** zeigt eine stellvertretende Aufnahme der durchgeführten Färbeversuche. Zu sehen sind die Färberückstände nach 10 min. Behandlung mit Kernechtrot und zweimal 5 min. mit Aqua dest. auf Polyethylenterephthalat (PET; links) und Polyamid 6 Guss (PA6C; rechts).
**Abbildung 5** zeigt das Resultat einer IHC Vimentin Färbung auf Schweinedarmgewebe, die in einer Inkubationsvorrichtung aus Polyketon ausgeführt wurde. Die Pfeile weisen auf die unregelmäßige Färbung hin.
**Abbildung 6** (A) zeigt schematisch das Prinzip der Kontaktwinkelmessung. Abbildung 6 (B) gibt tabellarisch Kontakwinkeldaten für Inkubationsvorrichtungen an, die aus verschiedenen Materialien gefertigt wurden.
**Abbildung 7** zeigt die Temperaturverteilung in einer Tecatron PVX black Inkubationsvorrichtung nach erhitzen. Hierzu wurden 350µl HIER-Lösung in die Inkubationsvorrichtung pipettiert und anschließend die Temperaturverteilung mit einer Infrarot-Kamera aufgezeichnet.
**Abbildung 8** zeigt Ergebnisse zum Aufheiz- (A) und Abkühlverhalten (B) einer Tecatron PVX black Inkubationsvorrichtung.
**Abbildung 9** zeigt das erfolgreiche Antigen-Retrieval und anschließende Färbung eines Lymphknotengewebes aus Schwein mit einem Ki67 Antikörper (Klon Mib1).

Die vorliegende Erfindung wird ferner durch die nicht-einschränkenden Beispiele illustriert, denen weitere Merkmale, Ausführungsformen, Aspekte und Vorteile der vorliegenden Erfindung entnommen werden können.

### Beispiel 1: Versuche mit Inkubationsvorrichtungen aus Aluminium, die jeweils mit Keramik, Glas und Gold beschichtet wurden

Als anfängliche Bedingung wurde definiert, dass das Material einer Inkubationsvorrichtung nach Behandlung mit den im Antigen-Retrieval und Färbeverfahren gängigen Reagenzien nicht korrodieren sollte. Dazu wurde der Werkstoff Aluminium als Grundlage verwendet und mit diversen Beschichtungen aus Keramik, Glas und Gold überzogen. Keines der verwendeten Materialien brachte zufriedenstellende Ergebnisse. So zeigte die Inkubationsvorrichtung aus Aluminium mit Keramik-Beschichtung Probleme in der Haltbarkeit bei Temperaturen um 100° C und die Reinigung der Vorrichtung nach Färbung mit organischen Stoffen erwies sich als schwierig. Für Inkubationsvorrichtungen mit Gold-Beschichtung erwies sich die Haltbarkeit der Beschichtung im wässrigen Milieu als problematisch. Auch die mit Glas beschichteten Vorrichtungen zeigten in diversen Tests keine zufriedenstellenden Ergebnisse.

### Beispiel 2: Versuche mit Inkubationsvorrichtungen aus Polyamid (PA), Polyetheretherketon (PEEK) und Polyethylenterephthalat (PET)

Anschließend an die oben genannten Materialien wurden die Eigenschaften von verschiedenen Kunststoffen, nämlich Polyamid (PA), Polyetheretherketon (PEEK) und Polyethylenterephthalat (PET), in diversen Tests untersucht. Es sollte festgestellt werden, ob sich das jeweilige Material zum Herstellen einer Inkubationsvorrichtung für ein Antigen-Retrieval und Einfärben geeignet. Zu diesem Zweck wurde die Autofluoreszenz von verschiedenen PAs (PA66 GF50, BASF; PA6/6T GF50, Solvay; PA66/6T GF60, EMS-Chemie) und PEEKs (PEEK CF30, Victrex) Materialien gemessen. Alle Kunststoffe zeigten Autofluoreszenz.

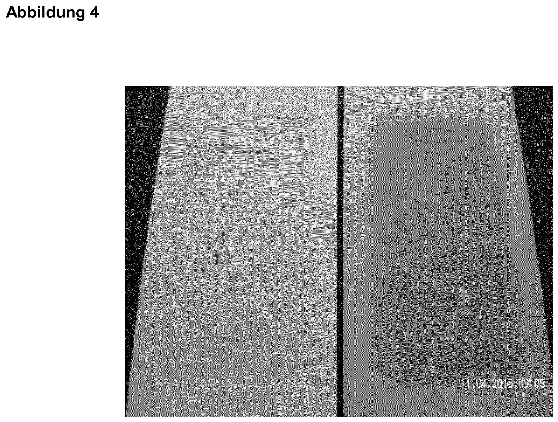

Darüber hinaus zeigten sich auf mit verschiedenen Färbemitteln behandelten Blöcken aus PA und PET Färberückstände. Beispielsweise zeigt die Abbildung 4 Färberückstände nach 10 min. Behandlung mit Kernechtrot und zweimal 5 min. mit Aqua dest. auf Polyethylenterephthalat (PET; links) und Polyamid 6 Guss (PA6C; rechts).

Zusätzlich zeigten Inkubationsvorrichtungen aus PET nach Hitzebehandlung stärkere Ausdehnungen als die Vorrichtungen aus den beiden anderen Kunststoffen. Diese Ausdehnungen waren so gravierend, dass eine Langzeitnutzung von Inkubationsvorrichtungen aus PET nicht möglich war.

Daraus ergibt sich, dass keiner der getesteten Kunststoffe PA, PEEK und PET die Voraussetzungen erfüllt, die für ein Antigen-Retrieval und anschließendes Einfärben notwendig sind.

### Beispiel 3: Versuche mit Inkubationsvorrichtungen aus Polyketon (PK)

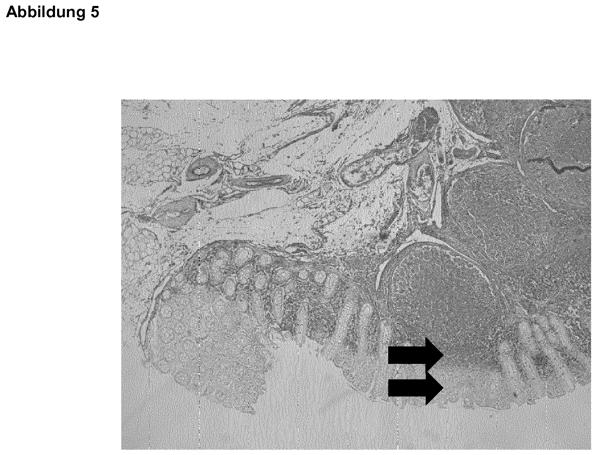

Polyketonblöcke und Inkubationsvorrichtungen aus Polyketon (PK) wurden auf ihre Xylolbeständigkeit, Farbstoffresistenz und thermische Belastbarkeit geprüft. Das Material konnte alle Test bestehen. Allerdings stellte sich im weiteren Testverlauf heraus, dass sich durch Hitzeeinwirkung unterhalb der Inkubationsvorrichtung eine Wölbung bildete, die eine gewünschte gleichmäßige Wärmeverteilung nicht zuließ und durch die sich Luftblasen in den Antigen-Retrieval Lösungen bildeten. Damit war eine gleichmäßige Färbung von Gewebeproben nicht zu gewährleisten. Stellvertretend wird auf die Abbildung 5 verwiesen, die das Resultat einer IHC Vimentin Färbung auf Schweinedarmgewebe zeigt. Die Pfeile weisen auf die unregelmäßige Färbung hin. Aufgrund dieser Defizite ist PK als Inbubationsvorrichtungsmaterial nicht tauglich.

### Beispiel 4: Versuche mit Inkubationsvorrichtungen aus Polyphenylensulfid (PPS), Polyphenylsulfon (PPSU) und Kunststoff-Kompositmaterialien

Weitere Versuche zur Xylolbeständigkeit, Farbstoffresistenz und thermischen Belastbarkeit von Polyphenylensulfid (PPS), Polyphenylsulfon (PPSU), dem Kunststoff-Kompositmaterial Tecatron GF40 (Ensinger GmbH, Germany) und dem Kunststoff-Kompositmaterial Tecatron PVX black (Ensinger GmbH, Germany) wurden unternommen.

Polyphenylensulfid (PPS) offenbarte nicht die gewünschte Wärmeleitfähigkeit und spezifische Wärmekapazität. Polyphenylsulfon (PPSU) zeigte keine gute Farbstoffresistenz. So besaßen PPSU Blöcke Farbstoffrückstände nach Hematoxylin und Alcian blau Färbung. Des Weiteren leitet PPSU die Wärme für ein Antigen-Retrieval nur unzureichend weiter.

Inkubationsvorrichtungen, die aus dem Kunststoff-Kompositmaterial Tecatron GF40 gefertigt wurden, zeigten eine ähnliche Blasenbildung wie Inkubationsvorrichtungen, die aus PK hergestellt wurden. Entsprechend war auch in diesem Fall nur eine unregelmäßige Färbung der Gewebeprobe zu beobachten.

Somit war das Kunststoff-Kompositmaterial Tecatron PVX black das einzige Material, das in der Gesamtheit von Xylolbeständigkeit, Farbstoffresistenz und thermischer Belastbarkeit die Kriterien erfüllt, um eine Inkubationsvorrichtung herzustellen, die für ein Antigen-Retrieval und Einfärben geeignet ist.

### Beispiel 5: Kontaktwinkelmessungen

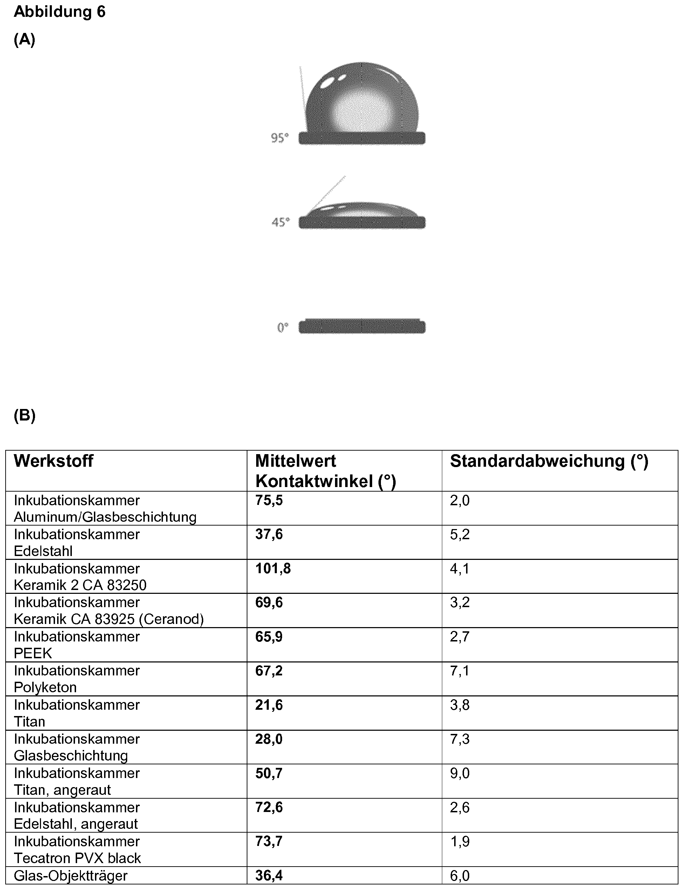

Kontaktwinkelmessungen wurden an Inkubationsvorrichtungen aus verschiedenen Materialien durchgeführt. Als Kontaktwinkel wird der Winkel bezeichnet, den ein Flüssigkeitstropfen auf der Oberfläche eines Feststoffs zu dieser Oberfläche bildet (siehe Abbildung 6A). Wird Wasser, wie im vorliegenden Fall, als Flüssigkeit verwendet, können die untersuchten Materialien in hydrophil, hydrophob und superhydrophob unterteilt werden.

Für die vorliegende Inkubationsvorrichtung muss der Kontaktwinkel zwischen 45° - 80° liegen. Zum einen wird eine hydrophile Oberfläche favorisiert, wobei die Oberflächenspannung des Wassers durch Temperatur und Chemikalien, wie z.B. Tween, herabgesetzt ist. Dadurch ergibt sich die obere Grenze von 80°. Durch den Einsatz von Alkoholen und Xylol ergibt sich eine untere Grenze von 45°, da sonst nicht mehr gewährleistet werden kann, dass die Flüssigkeiten innerhalb der Vorrichtung verbleiben. Wie aus Abbildung 6B ersichtlich ist, besitzt eine Inkubationsvorrichtung, die aus Tecatron PVX black gefertigt wurde, einen Kontaktwinkel von 73,7° und liegt somit im gewünschten Bereich.

### Beispiel 6: Thermische Belastbarkeit von Inkubationsvorrichtungen aus Tecatron PVX black

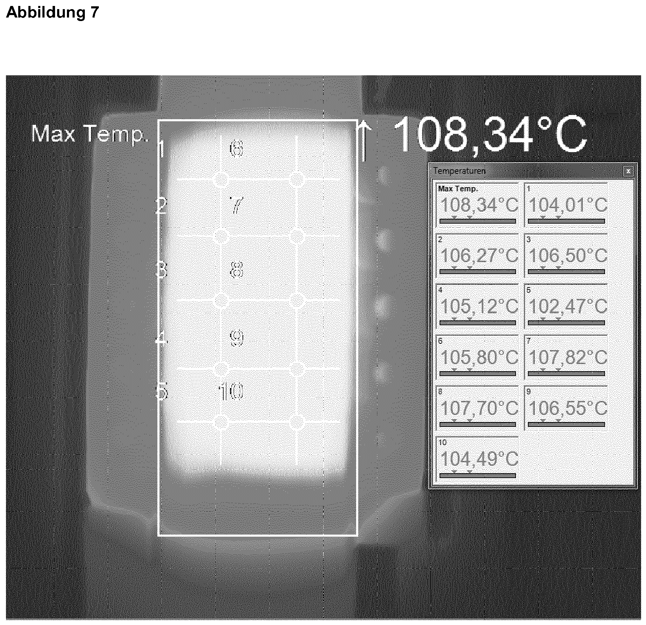

In einem ersten Versuch wurde die Temperaturverteilung einer Inkubationsvorrichtung aus Tecatron PVX black nach Erhitzen durch ein Heizgerät mit einer Infrarot-Kamera gemessen. Es kann eine gleichmäßige Temperaturverteilung über die gesamte Inkubationsvorrichtung gemessen werden (siehe Abbildung 7). Eine solche gleichmäßige Temperaturverteilung ist Voraussetzung für ein erfolgreiches Antigen-Retrieval Verfahren.

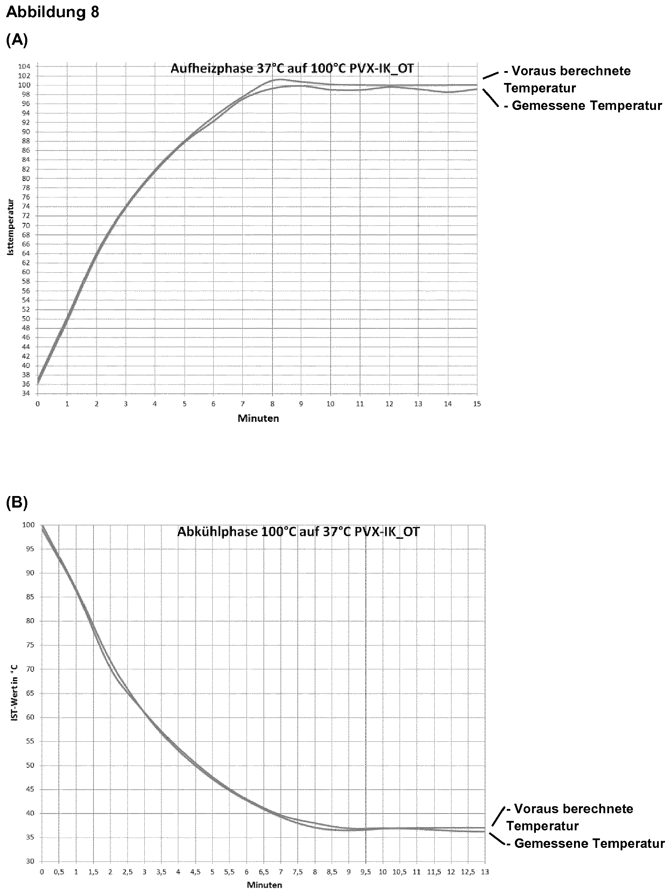

Des Weiteren wurde mit Hilfe eines Temperatursensors und einer mathematischen Gleichung beobachtet wie schnell und vorhersagbar sich eine Inkubationsvorrichtung aus Tecatron PVX black erhitzen und wieder abkühlen lässt. Die Abbildungen 8A und B zeigen eine schnelle und wie in einem parallelen Realtime Verfahren berechnete (also vorhersagbare) Erhitzung und Abkühlung des Kompositmaterials.

### Beispiel 7: Antigen-Retrieval und Färben einer Gewebeprobe mit einer Inkubationsvorrichtung aus Tecatron PVX black

Abbildung 9 zeigt das erfolgreiche Antigen-Retrieval und die anschließende Färbung eines Lymphknotengewebes aus Schwein mit einem Ki67 Antikörper (Klon Mib1) und Hämatoxylin. Die für das Antigen-Retrieval und die Färbung genutzte Inkubationsvorrichtung bestand aus Tecatron PVX black.

Die Erfindung wird hierin generisch und allgemein beschrieben. Jede der engeren Arten und Untergruppen, die unter die generische Offenbarung fallen, bilden auch einen Teil der Erfindung. Dies schließt die allgemeine Beschreibung der Erfindung mit einer Vorbehalts- oder Negativbeschränkung ein, die jeden Gegenstand von einer (Unter-)Gruppe entfernt, unabhängig davon, ob der ausgeschnittene Gegenstand hier spezifisch zitiert ist oder nicht. Andere Ausführungsformen sind in den folgenden Ansprüchen enthalten.

Ein Fachmann wird leicht erkennen, dass die vorliegende Erfindung gut dazu geeignet ist, die Aufgaben auszuführen und die erwähnten Vorteile sowie die damit verbundenen Ziele zu erreichen. Ferner ist es für den Fachmann ohne weiteres ersichtlich, dass verschiedene Substitutionen und Modifikationen an der hier offenbarten Erfindung vorgenommen werden können, ohne vom Umfang und Geist der Erfindung abzuweichen. Die hierin beschriebenen Verfahren, Verwendungen, Behandlungen, Moleküle und Kits sind repräsentativ für bevorzugte Ausführungsformen, die beispielhaft sind und nicht als Beschränkungen des Umfangs der Erfindung gedacht sind. Änderungen darin und andere Verwendungen werden dem Fachmann einfallen, die im Umfang der Erfindung eingeschlossen sind und durch den Umfang der Ansprüche definiert sind. Die Auflistung oder Diskussion eines zuvor veröffentlichten Dokuments in dieser Beschreibung sollte nicht notwendigerweise als Bestätigung dafür verstanden werden, dass das Dokument zum Stand der Technik gehört oder allgemein bekannt ist.

Die hierin veranschaulichend beschriebene Erfindung kann in geeigneter Weise in Abwesenheit von irgendeinem Element oder Beschränkungen, die hier nicht speziell offenbart sind, ausgeführt werden. So werden beispielsweise die Ausdrücke "umfassend", "einschließlich", "enthaltend" usw. umfassend und ohne Einschränkung gelesen. Das Wort "umfassen" oder Variationen, wie "umfasst" oder "umfassend", werden dementsprechend als implizit verstanden, d.h. beispielsweise, dass angegebene Zahlen einbezogen, aber nicht ausgeschlossen werden. Zusätzlich wurden die hierin verwendeten Begriffe und Ausdrücke als Ausdrücke der Beschreibung und nicht der Begrenzung verwendet, und es gibt keine Absicht solche Begriffe und Ausdrücke, um jegliche Äquivalente der gezeigten und beschriebenen Merkmale oder Teile davon zu begrenzen. D.h. dass verschiedene Modifikationen innerhalb des Schutzumfangs der beanspruchten Erfindung möglich sind. Somit sollte verstanden werden, dass, obwohl die vorliegende Erfindung durch beispielhafte Ausführungsformen und optionale Merkmale spezifisch offenbart worden ist, Modifikationen und Variationen der Erfindungen, die hierin offenbart sind, von Fachleuten auf dem Feld verwendet werden können, und dass solche Modifikationen und Variationen als innerhalb des Schutzumfangs dieser Erfindung anzusehen sind.

Der Inhalt aller Dokumente und Patentdokumente, die hierin zitiert sind, wird durch Bezugnahme in ihrer Gesamtheit aufgenommen.

### Bezugszeichen

- (1): Inkubationsvorrichtung
- (2): Objektträger
- (3): erste Einheit der Inkubationsvorrichtung
- (4): zweite Einheit der Inkubationsvorrichtung
- (5): Einlassöffnung
- (6): Auslassöffnung
- (7): Flüssigkeit
- (8): Reservoirvorrichtung
- (9): Inkubationssystem

## Patentansprüche

1. Eine Inkubationsvorrichtung (1) für einen Objektträger (2), wobei die Inkubationsvorrichtung (1)
(i) eine erste Einheit (3) umfasst, um den Objektträger (2) reversibel aufzunehmen, und
(ii) eine zweite Einheit (4) umfasst, um den aufgenommenen Objektträger (2) mit einer Flüssigkeit (7) in Kontakt zu bringen und
das Inkubationsvorrichtungsmaterial
a) eine Schmelztemperatur von mindestens 150° C;
b) eine spezifische Wärmekapazität von höchstens 1,0 J/(g*K);
c) eine Wärmeleitfähigkeit von mindestens 0,4 W/(K*m);
d) eine Wasseraufnahme von weniger als 0,1 %; und
e) einen Kontaktwinkel zwischen 45° bis 80° besitzt.

2. Die Inkubationsvorrichtung (1) nach Anspruch 1, wobei das Inkubationsvorrichtungsmaterial ein Kompositmaterial ist, das mindestens drei, bevorzugt alle, Komponenten aus der Gruppe bestehend aus Grafit, Kohlefaser, Sulfidpolymer und halogeniertes aromatisches Polymer umfasst oder aus diesen besteht.

3. Die Inkubationsvorrichtung (1) nach Anspruch 2, wobei
(i) das Sulfidpolymer aromatische Kohlenstoffringe umfasst und bevorzugt Polyphenylensulfid (PPS) ist; und/oder
(ii) das halogenierte aromatische Polymer ein fluoriertes Polymer, bevorzugt Polytetrafluorethylen (PTFE) ist.

4. Die Inkubationsvorrichtung (1) nach einem der Ansprüche 1 bis 3, wobei die Inkubationsvorrichtung (1) eine Einlassöffnung (5) und eine Auslassöffnung (6) aufweist und diese über die zweite Einheit (4) der Inkubationsvorrichtung (1) fluidisch miteinander verbunden sind.

5. Die Inkubationsvorrichtung (1) nach einem der Ansprüche 1 bis 4, wobei die Inkubationsvorrichtung (1)
(i) ein Gewicht zwischen 5 und 40 Gramm, bevorzugt zwischen 15 und 25 Gramm aufweist; und/oder
(ii) aus mindestens zwei Teilen besteht.

6. Die Inkubationsvorrichtung (1) nach einem der Ansprüche 1 bis 5, wobei die Inkubationsvorrichtung gegen Xylol inert ist.

7. Ein Inkubationssystem (9) umfassend
(i) die Inkubationsvorrichtung (1) nach einem der Ansprüche 1 bis 6, und
(ii) eine Reservoirvorrichtung (8), die die Flüssigkeit, mit der der Objektträger in Kontakt gebracht werden soll, bereitstellt.

8. Das Inkubationssystem (9) nach Anspruch 9, wobei die Inkubationsvorrichtung (1) und die Reservoirvorrichtung (8) fluidisch miteinander verbunden sind.

9. Verwendung eines Kompositmaterials zur Herstellung einer Inkubationsvorrichtung (1) für einen Objektträger (2), wobei das Kompositmaterial
a) eine Schmelztemperatur von mindestens 150° C;
b) eine spezifische Wärmekapazität von höchstens 1,0 J/(g*K);
c) eine Wärmeleitfähigkeit von mindestens 0,4 W/(K*m);
d) eine Wasseraufnahme von weniger als 0,1 %; und
e) einen Kontaktwinkel zwischen 45° bis 80° besitzt.

10. Die Verwendung nach Anspruch 9, wobei das Kompositmaterial mindestens drei, bevorzugt alle, Komponenten aus der Gruppe bestehend aus Grafit, Kohlefaser, Sulfidpolymer und halogeniertes aromatisches Polymer umfasst oder aus diesen besteht.

11. Die Verwendung nach einem der Ansprüche 9 oder 10, wobei
(i) das Sulfidpolymer aromatische Kohlenstoffringe umfasst und bevorzugt Polyphenylensulfid (PPS) ist;
(ii) das halogeniertes aromatisches Polymer ein fluoriertes Polymer, bevorzugt Polytetrafluorethylen (PTFE) ist; und/oder
(iii) das Kompositmaterial gegen Xylol inert ist.

12. Verfahren zum Färben einer Probe auf einem Objektträger (2), wobei das Verfahren die folgenden Schritte umfasst:
(i) Aufnehmen des Objektträgers (2) mit Probe in die Inkubationsvorrichtung (1) nach einem der Ansprüche 1 bis 6; und
(ii) in Kontakt Bringen der Probe mit einer Färbelösung.

13. Das Verfahren nach Anspruch 12, wobei die Probe ein biologisches Material ist.

14. Das Verfahren nach einem der Ansprüche 12 oder 13, wobei die Färbelösung Antikörper, Hämatoxylin, Eosin, Eisenhämatoxylin, Azokarmin, Methylenblau, Toluidinblau, Anilinblau, Pikrinsäure, Säurefuchsin, Kongorot, Perjodsäure, Silber, Orange G, Kaliumhexacyanoferrat, Diaminobenzidin (DAB), Kernechtrot oder Kombinationen davon umfasst.
